Europäisches Patentamt

European Patent Office

Office européen des brevets

(19)

(11) Veröffentlichungsnummer: **0 121 779**
B1

(12) # EUROPÄISCHE PATENTSCHRIFT

(45) Veröffentlichungstag der Patentschrift:
08.10.86

(51) Int. Cl.⁴: **F 16 D 3/48**

(21) Anmeldenummer: **84102483.9**

(22) Anmeldetag: **08.03.84**

(54) **Ausgleichskupplung.**

(30) Priorität: **09.04.83 DE 3312825**

(43) Veröffentlichungstag der Anmeldung:
**17.10.84 Patentblatt 84/42**

(45) Bekanntmachung des Hinweises auf die Patenterteilung:
**08.10.86 Patentblatt 86/41**

(84) Benannte Vertragsstaaten:
**AT CH DE FR GB IT LI SE**

(56) Entgegenhaltungen:
**CH - A - 434 896
CH - A - 623 640
DE - C - 714 243
GB - A - 316 030
GB - A - 1 513 071
US - A - 981 736**

(73) Patentinhaber: **INKOMA
Industrie-Konstruktion-Maschinenbau, OT-Schandelah,
D-3302 Cremlingen (DE)**

(72) Erfinder: **Obermeier, Manfred, Am Osterberg 3,
D-3301 Apelnstedt (DE)**

(74) Vertreter: **Lins, Edgar, Dipl.-Phys. et al, Patentanwälte
Gramm + Lins Theodor-Heuss-Strasse 2,
D-3300 Braunschweig (DE)**

## Beschreibung

Die Erfindung betrifft eine Ausgleichskupplung mit mittels mehrerer Bolzen verbundenen Flanschen, von denen einer mit einem rotierenden Antriebskörper und der andere mit einem rotierenden Abtriebskörper verbunden ist, wobei die Bolzen einen an einem der beiden Flansche befestigten Zapfen aufweisen, und in eine an dem anderen Flansch befestigte Hülse ragen und sich die Hülse über eine in axialer Richtung gewölbte Oberfläche auf dem Zapfen abstützt, die durch einen auf den Zapfen verschiebbar gelagerten Kalottenring gebildet ist.

Derartige Ausgleichskupplungen sind seit langem bekannt und dienen dazu, eine Übertragung von Drehbewegungen auch bei Achsen zu ermöglichen, die nicht miteinander fluchten, sondern einen geringen Winkel zueinander bilden. Dies tritt in der Praxis häufig bei längeren Wellen auf, die eine gewisse Durchbiegung erfahren, so dass bereits dadurch die Achsenenden einen Winkel miteinander bilden. Dies tritt in der Praxis überall dort auf, wo Antriebe miteinander gekoppelt werden sowie bei langen Walzenantrieben, die eine gewisse Durchbiegung erfahren. Man erhält durch diese Gegebenheit von vornherein auch bei sorgfältiger Montage einen gewissen Flucht- und Beugungsfehler, welche als Kantenbelastung auf entsprechende Lagerstellen wirkt und somit zu frühzeitigem Verschleiss dieser Elemente führt. Zum Ausgleich dieser bekannten Fehler setzt man eine Vielzahl unterschiedlicher Kupplungen zur Übertragung der Drehbewegungen als Ausgleichskupplungen ein. Man hat früher versucht, die Übertragung der Drehbewegung mit Ausgleichskupplungen der oben beschriebenen Art dadurch vorzunehmen, dass die Lagerung zwischen Hülse und Zapfen über den Kalottenring mit Spiel ausgeführt worden ist, das die Schrägstellung der Achsen zueinander erlaubt hat (vgl. US-A-981 736; DE-C-714 243 und DE-A-1 909 213). Bei der US-A-981 736 ist dieses Spiel erforderlich, weil sich die Kalottenringe auf dem Zapfen translatorisch verschieben, also zueinander nur parallel verschiebbar sind. Beim Übergang von der fluchtenden Position der Achsen in eine abgewinkelte Position müssen sich die Kalottenringe zueinander aber auf einer Kreisbahn bewegen. Diese an sich widerstreitenden Bewegungen können nur für kleine Drehwinkelfehler mit Hilfe eines Spiels in der Lagerung realisiert werden. Ersichtlich ist bei der US-A-981 736 das Spiel zwischen dem Zapfen und dem Kalottenring vorgesehen, da die Hülse den Kalottenring fest umschliesst.

Das zwischen Zapfen und Hülse durch das Spiel zwischen Zapfen und Kalottenring vorhandene Spiel führt zu einer Phasenverschiebung der Übertragung der Drehbewegung von dem Antriebskörper auf den Abtriebskörper. Hierzu kommt es zu einem Schlagen in der Kupplung, das sich insbesondere bei einer reversierenden Bewegung stark auswirkt. Eine echte drehstarre Übertragung ist daher mit den bekannten Ausgleichskupplungen nicht möglich. Technisch ist diese Ausführung nur für geringe Drehzahlen und geringe Winkelfehler geeignet. Sollte ein Achsversatz sowie ein grosser Winkelfehler vorhanden sein, würde das Drehspiel innerhalb dieses Winkels so gross werden, dass die Lösung technisch gar nicht verwendbar ist.

In jüngerer Zeit sind elastische Bolzenkupplungen mit Gummielementen erstellt worden, die eine gewisse Anpassung an eine variierende Länge und einen evtl. Biegewinkel erlauben. Derartige Gummielemente verhindern aber, dass mit der Kupplung hohe Drehmomente übertragen werden können. Auch hierbei entstehen Phasenverschiebungen zwischen Antriebskörper und Abtriebskörper. Neben diesen Relativbewegungen können in dem System auch noch Drehschwingungen erzeugt werden.

Durch die CH-A-623 640 ist eine Verbindung zwischen Flanschen zweier Wellen bekannt, die aus lediglich einem Mitnehmerbolzen besteht. Dieser ist mit einem der Flansche fest verbunden und wird in dem anderen der Flansche in einem Fenster geführt, das zum Mitnehmerbolzen hin und radial offen ist. Beim Achsversatz zwischen den beiden Wellen sowie bei einer Winkelbildung kann der Bolzen, der aus einem Zapfen mit einem Kalottenring besteht, radial wandern. In einer ersten Ausführungsform kann sich der Kalottenring, der fest auf dem Zapfen sitzt, auch axial in dem Fenster verschieben. In einer zweiten Ausführungsform sind die Wände des Fensters an die Form des Kalottenrings angepasst, so dass dieser nur noch in dem Fenster in radialer Richtung wandern kann. In dieser Ausführungsform kann der Zapfen in dem Kalottenring in axialer Richtung gleiten. In beiden Ausführungsformen liegt eine Anordnung vor, die der US-A-981 736 im wesentlichen entspricht. Allerdings wird ein Verklemmen vermieden, weil die beiden Wellen nur über einen Mitnehmer miteinander gekoppelt sind, so dass keine echte Verbindung zwischen den Wellen mit mehreren Bolzen besteht.

Der Erfindung liegt daher die Aufgabe zugrunde, eine Ausgleichskupplung mit über mehreren Bolzen miteinander verbundenen Flanschen der eingangs erwähnten Art zu erstellen, die eine drehstarre, spielfreie Übertragung von grossen Drehmomenten bei rotierenden Körpern erlaubt, die nicht miteinander fluchten, sonderen einen Winkelfehler bis zu mehreren Winkelgraden miteinander bilden.

Diese Aufgabe wird erfindungsgemäss dadurch gelöst, dass der Kalottenring gegenüber der Hülse in axialer Richtung verschiebbar gelagert ist und dass mindestens eine Druckfeder den Kalottenring in seine Ausgangsposition zurückdrückt.

Die erfindungsgemässe Ausgleichskupplung erlaubt erstmals die Lösung der gestellten Aufgabe mit einer spielfreien Lagerung, also die Realisierung einer echten drehstarren Übertragung von hohen Drehzahlen bis zu 12 000 Umdrehungen pro Minute, und auch entsprechend grossen Drehmomenten. Das bei einer spielfreien Ausführung der Anordnung gemäss US-A-981 736 notwendigerweise auftretende Verklemmen bei nicht miteinander fluchtenden Achsen wird erfindungsgemäss in einfacher Weise dadurch vermieden, dass eine axiale, translatorische Relativbewegung zwischen dem Kalottenring und der Hülse möglich ist. Dies kann in einfacher Weise dadurch realisiert werden, dass die Hülse eine zylindrische Innenwandung hat, die also an die Oberfläche des Kalottenrings nicht angepasst ist. Die Druckfeder drückt nach einer Auslenkung des Kalottenrings diesen in seine Ausgangsposition zurück, so dass eine definierte Lage des Kalottenrings erzielt wird.

Da die Hülse gegenüber dem Zapfen längsverschieblich ist, kann die erfindungsgemässe Ausgleichskupplung auch Längenänderungen aufnehmen.

Vorzugsweise stützt sich die Druckfeder an einer an der Hülse anliegenden Ringscheibe ab.

Vorzugsweise kann eine zweite Druckfeder vorgesehen sein, die an einem zweiten Anschlag anliegend in das Innere der Hülse ragt und mit Vorspannung an dem Kalottenring anliegt. Die axiale Verschiebung des Kalottenrings erlaubt eine korrekte Führung der gegenüber dem Zapfen schräggestellten Hülse. Die Schrägstellung führt nämlich zu einer Wanderung des Kalottenrings und dem zweiten Anschlag in axialer Richtung gegen die Kraft der ersten Druckfeder in Richtung auf den ersten Anschlag. Diese Bewegung kann von dem Kalottenring durch die erfindungsgemässe Ausführung der Kupplung ausgeführt werden.

Da sich der Kalottenring in dieser Ausführungsform im wesentlichen an der Ringscheibe abstützt, ist es vorteilhaft, wenn in dieser Ausführungsform die Federkraft der ersten Druckfeder wesentlich grösser ist als die Federkraft der zweiten Druckfeder. Das Überwiegen der Federkraft der ersten Druckfeder sorgt dafür, dass die Hülse weiterhin in ihre Ausgangsposition zurückgedrückt wird.

In einer alternativen und für die Fertigung vorteilhaften Ausführungsform sind der Kalottenring und die Hülse beidseitig mit Ringscheiben abgeschlossen und von zwei etwa gleich starken, gegeneinander wirkenden Federn in ihrer Ausgangsposition gehalten. Diese Ausführungsform hat die gleichen dynamischen Eigenschaften, lässt sich jedoch einfacher fertigen, weil zwei gleiche Druckfedern gleichen Durchmessers Verwendung finden. Die Ausgangsposition des Kalottenrings ist hier eine neutrale Lage, in der sich die Federkräfte gegeneinander aufheben bzw. die Federn entspannt sind, so dass sie in dieser Lage keine Kraft ausüben.

Eine günstige Geometrie bei der Schiefstellung des Flansches lässt sich dadurch erreichen, dass die Befestigung der Bolzen im Flansch in unterschiedlichen Einbaurichtungen erfolgt ist. Liegen die umgekehrt eingebauten Bolzen diametral gegenüber, entsteht in beiden Bolzen bei der Schiefstellung eine völlig gleiche Schiefstellung und axiale Verschiebung der Hülsen.

In einer äusserst vorteilhaften Ausführungsform ist zwischen den beiden Flanschen wenigstens eine Zwischenscheibe angeordnet, wobei die Flansche mit der Zwischenscheibe mit den Bolzen verbunden sind. Diese Drei-Scheiben-Kupplung erlaubt auch die Realisierung eines axialen Versatzes zweier parallel zueinander verlaufender Drehwellen, wobei lediglich die Zwischenscheibe schräggestellt ist, die aber während der Drehung der Kupplung keine Relativbewegung zu den beiden Flanschen ausführt. Die Schrägstellung wird durch die Konstruktion der Bolzen aufgefangen. In dieser Ausführungsform stellt die Kupplung eine völlig neuartige Konstruktion einer einen axialen Versatz erlaubenden Ausgleichskupplung dar.

Es ist ersichtlich, dass das Ausmass des axialen Versatzes durch die vorgenannte Ausführungsform begrenzt ist. Für grössere axiale Versätze ist es vorteilhaft, den Flansch eines rotierenden Körpers mit einer eine Axialversetzung erlaubenden Kupplung zu verbinden und die Verbindung der Kupplung mit dem Flansch des anderen rotierenden Körpers über die Bolzen durchzuführen. Die daraus entstehende Ausgleichskupplung erlaubt sowohl die Realisierung eines grossen axialen Versatzes als auch den Ausgleich eines Winkels zwischen den Drehkörpern. Dies ist insbesondere bei grossen Anlagen von Bedeutung, weil längere Drehwellen zum Durchbiegen neigen und dadurch den Winkel am Flansch produzieren. Diese Konstellation hat in der Praxis zu erheblichen Problemen geführt, die durch die erfindungsgemässe Kupplung gelöst worden sind.

Die Erfindung soll im folgenden anhand von in der Zeichnung dargestellten Ausführungsbeispielen näher erläutert werden. Es zeigen:

Fig. 1 eine Ausgleichskupplung für axial versetzte und schräg zueinander verlaufende Antriebswellen, von der Seite gesehen;

Fig. 2 eine Ansicht auf die Anordnung aus Fig. 1 von vorne;

Fig. 3 eine Zwei-Scheiben-Kupplung;

Fig. 4 eine Ansicht der Kupplung aus Fg. 3 von vorn;

Fig. 5 eine Drei-Scheiben-Kupplung;

Fig. 6 eine Ansicht der Kupplung aus Fig. 5 von vorn;

Fig. 7 eine Drei-Scheiben-Kupplung mit einer alternativen Ausführungsform der Bolzenanordnung.

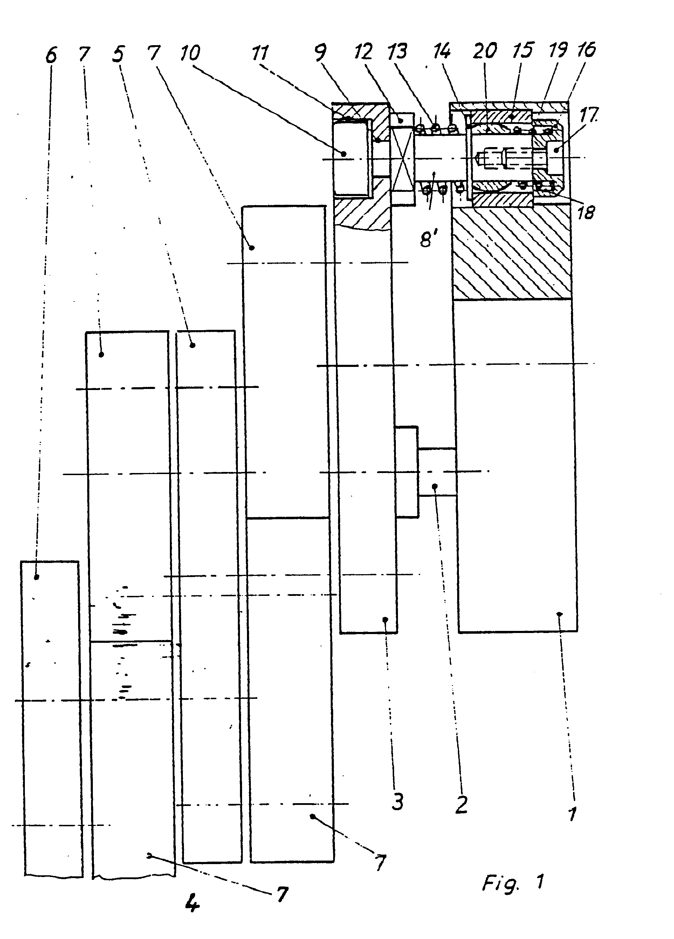

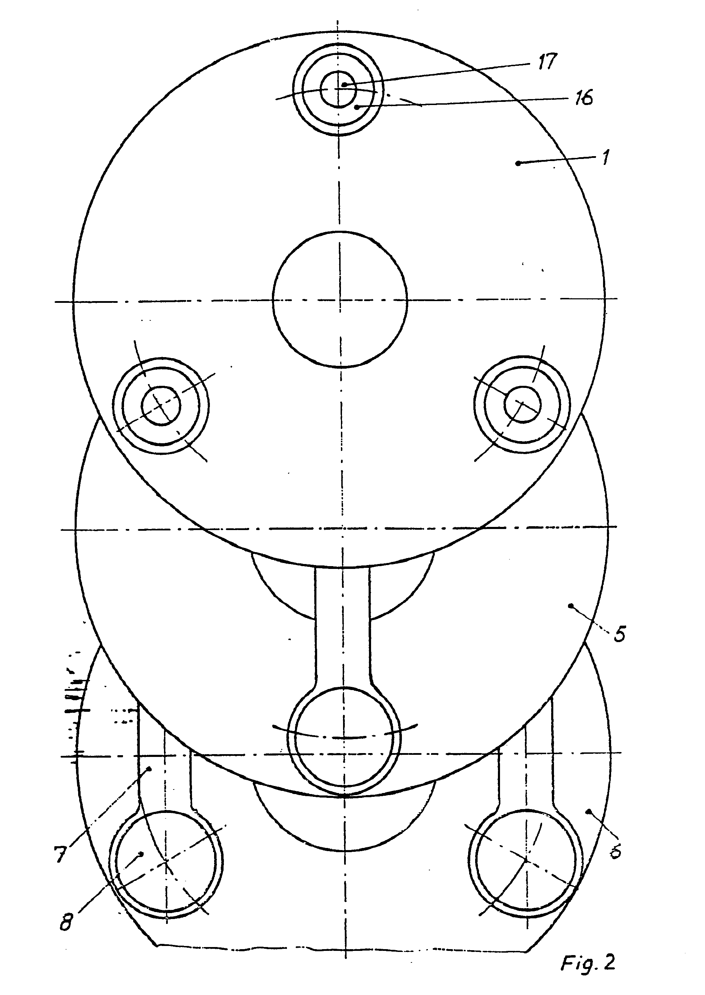

Die in den Fig. 1 und 2 dargestellte Ausgleichskupplung weist eine als Flansch für eine (nicht dargestellte) Abtriebswelle dienende Scheibe 1 auf, die über drei Bolzen 2 mit einer Scheibe 3 einer durch die CH-A-434 896 bekannten Kupplung 4 verbunden ist. Die Kupplung 4 besteht aus drei Scheiben 3, 5, 6, die über jeweils drei Lenker 7 miteinander verbunden sind. Die Lenker weisen an ihren Enden jeweils ein Drehgelenk 8 auf, von denen das eine mit einer der Scheiben 3, 5, 6 und das andere mit der benachbarten Scheibe 3, 5, 6 verbunden ist. Durch die Lenker 7 sowie die Zwischenscheibe 5 ist es möglich, die Scheibe 6 innerhalb eines bestimmten Radius in jeder axialen Stellung zur Scheibe 3 zu bringen. Die Kupplung 4 ermöglicht dabei eine drehwinkelgetreue Übertragung einer Drehbewegung einer mit der Scheibe 6 verbundenen (nicht dargestellten) Antriebswelle auf die Scheibe 3 und die damit verbundene Scheibe 1. In der Gesamtanordnung dient die Kupplung 4 zur Ermöglichung eines grösseren axialen Versatzes der Antriebswelle zur Abtriebswelle.

Der Bolzen 2 besteht aus einem Zapfen 8', der mit einem Gewinde durch eine Bohrung 9 in der Scheibe 3 hindurchragt und dort mittels einer Mutter 10 innerhalb einer entsprechend geformten Aufnahme 11 in der Scheibe 3 festlegbar ist. Im montierten Zustand liegt an der Scheibe 3 ein flanschartiger Anschlag 12 an, gegen dessen andere Seite eine um den Zapfen 8' herumgewundene erste Druckfeder 13 drückt. Diese erste Druckfeder 13 liegt mit ihrem anderen Ende an einer auf den Zapfen aufgeschobenen Ringscheibe 14 an. Diese wiederum wird durch die erste Druckfeder 13 gegen eine Hülse 15 gedrückt, die mit ihrem anderen Ende an einem zweiten flanschartigen Anschlag 16 anliegt, der mittels einer in den Zapfen 8' eingeschraubten Inbusschraube 17 am Zapfen 8' befestigt ist. In eine radial umlaufende Nut 18 mit einem Innendurchmesser, der dem Aussendurchmesser des Zapfens 8' entspricht, ist eine zweite Druckfeder 19 eingelegt, die einen Kalottenring 20 gegen die Ringscheibe 14 drückt. Der Kalottenring weist eine in axialer Richtung tonnenförmig gewölbte Oberfläche auf, auf der sich die Hülse 15 abstützt. Die Hülse 15 ist in die Scheibe 1 eingepresst. Da die Hülse 15 sich auf der tonnenförmig gewölbten Oberfläche des Kalottenrings 20 schrägstellen kann, kann sich auch die Scheibe 1 gegenüber der Scheibe 3 schrägstellen. Wird die Scheibe 6 durch eine Antriebswelle in Rotation versetzt, wird diese Rotation drehwinkelgetreu auf die gegebenenfalls schräggestellte Scheibe 1 übertragen. Die Scheibe 1 wird beispielsweise durch eine lange, etwas durchhängende Abtriebswelle schräggestellt. Diese Abtriebswelle kann also mit dem dargestellten Gesamtgetriebe drehwinkelgenau von der mit der Scheibe 6 verbundenen Antriebswelle in Rotation versetzt werden. Die in den Fig. 1 und 2 dargestellte Lage der Lenker ist für einen maximalen axialen Versatz gültig. Durch Variation der Stellung der Lenker kann auch jeder andere kleinere axiale Versatz, einschliesslich des Versatzes 0 realisiert werden. Zusätzlich ist durch die mit dem Bolzen angekoppelte Scheibe 1, die auch direkt von einem mit der Abtriebswelle einstückig verbundenen Flansch gebildet sein kann, eine Schiefstellung der Abtriebswelle zur Antriebswelle möglich.

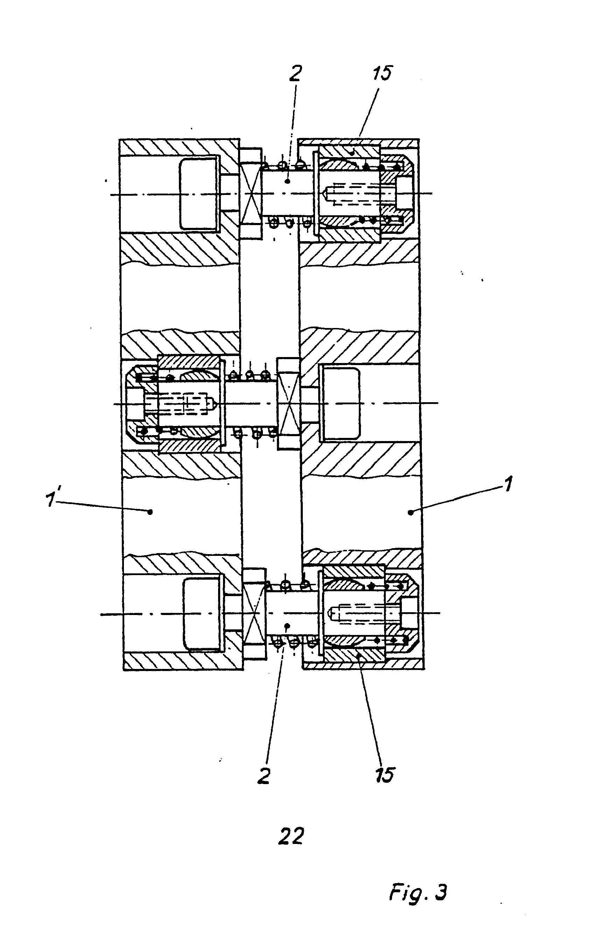

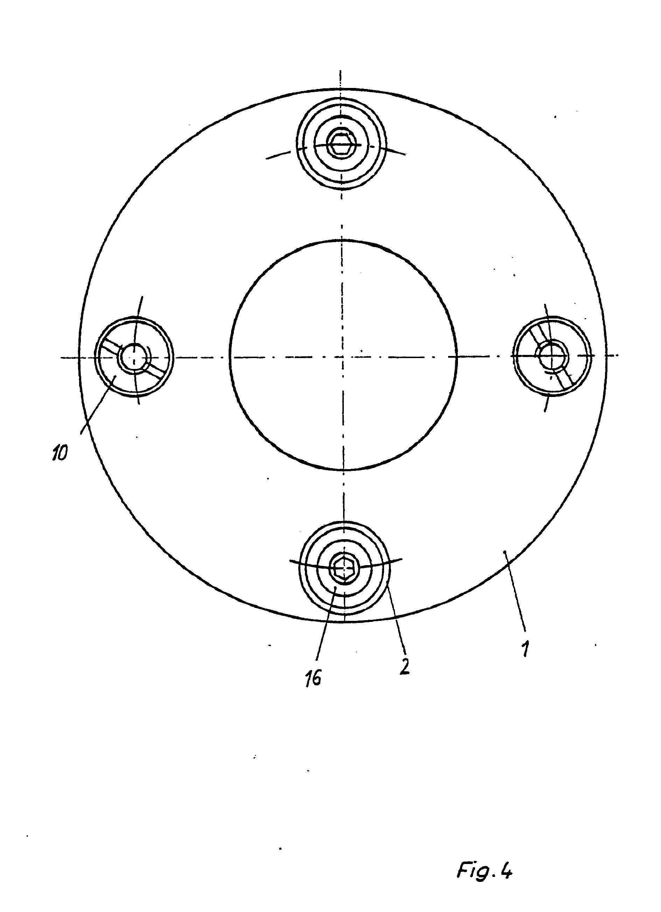

In den Fig. 3 und 4 sind zwei Scheiben 1, 1' dargestellt, von denen eine mit einer Antriebswelle und die andere mit einer Abtriebswelle verbunden sein können. Die durch die beiden Scheiben 1, 1' gebildete Zwei-Scheiben-Kupplung 22 ermöglicht eine Schiefstellung von Antriebswelle zur Abtriebswelle. Bei der in Fig. 3 und 4 dargestellten Ausführungsform sind vier Bolzen vorgesehen, von denen jeweils zwei in umgekehrter Richtung eingebaut sind, d.h. wenn die Hülse 15 eines Bolzens in der Scheibe 1 befestigt ist, ist die entsprechende Hülse 15 des um 0° verdreht angebrachten Bolzens 2 in der Scheibe 1' befestigt. Diese Anordnung hat den Vorteil, dass die Schiefstellung der Scheiben zueinander in beiden Hülsen zu einer gleichen Schrägstellung und eventuellen axialen Auslenkung führt.

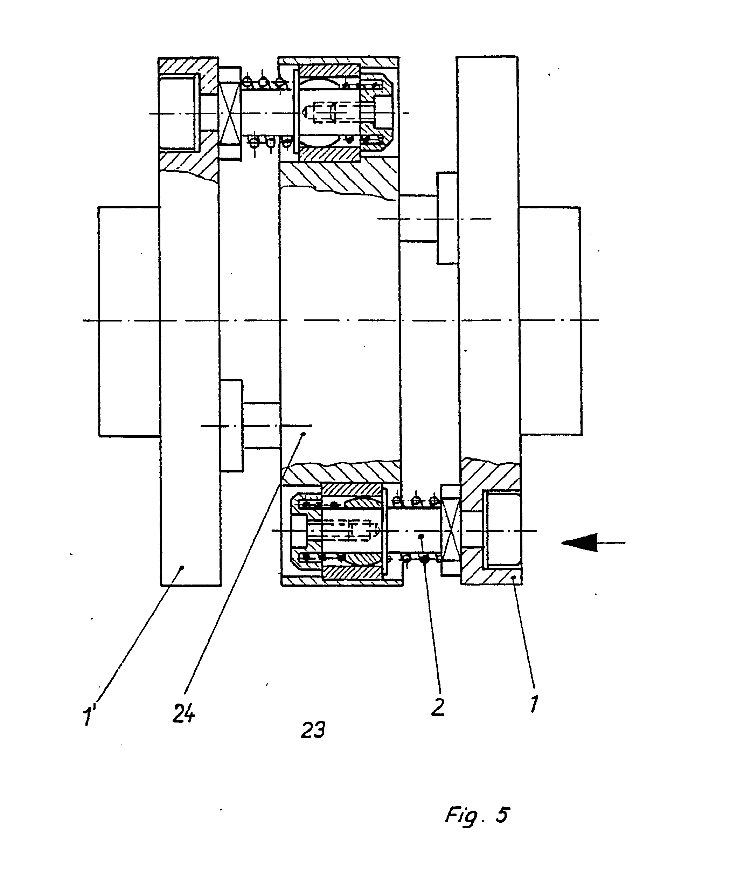

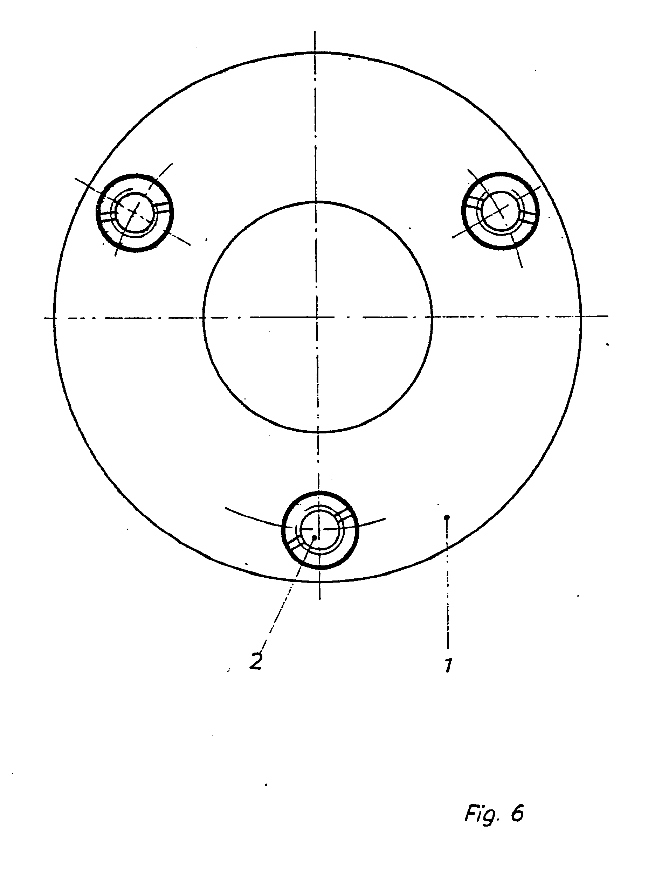

Die in den Fig. 5 und 6 dargestellte Drei-Scheiben-Kupplung 23 weist zwei Scheiben 1, 1' auf, die wiederum zur Verbindung mit einer Antriebs- bzw. Abtriebswelle vorgesehen sind. Die beiden Scheiben sind über eine Zwischenscheibe 24 miteinander verbunden. Jeweils drei Bolzen 2 halten die Scheibe 1 bzw. 1' an der Zwischenscheibe 23, so dass in der Zwischenscheibe 23 sechs Buchsenteile der Bolzen 2 über den Umfang der Zwischenscheibe 24 gleichmässig verteilt sind. Da die Scheibengrösse aller drei Scheiben 1, 1' und 24 gleich gross ist, ist in Fig. 6 in der Darstellung der Ansicht gemäss Pfeilrichtung aus Fig. 5 nur die Scheibe 1 mit den drei Bolzen 2 zu erkennen.

Die Drei-Scheiben-Kupplung 23 ermöglicht selbstverständlich ebenfalls eine Schiefstellung der Abtriebsachse bezüglich der Antriebsachse, darüber hinaus aber auch die Realisierung eines gewissen axialen Versatzes zwischen der Antriebs- und der Abtriebswelle. Hierzu bleiben die Scheiben 1, 1' parallel gestellt, die Zwischenscheibe 24 steht jedoch schief. Die Schiefstellung wird durch die Schiefstellung der Hülsen 15 in der Zwischenscheibe 24 aufgefangen. Somit lässt sich mit der erfindungsgemässen Kupplung auch ein Drehantrieb von axial versetzten Wellen realisieren.

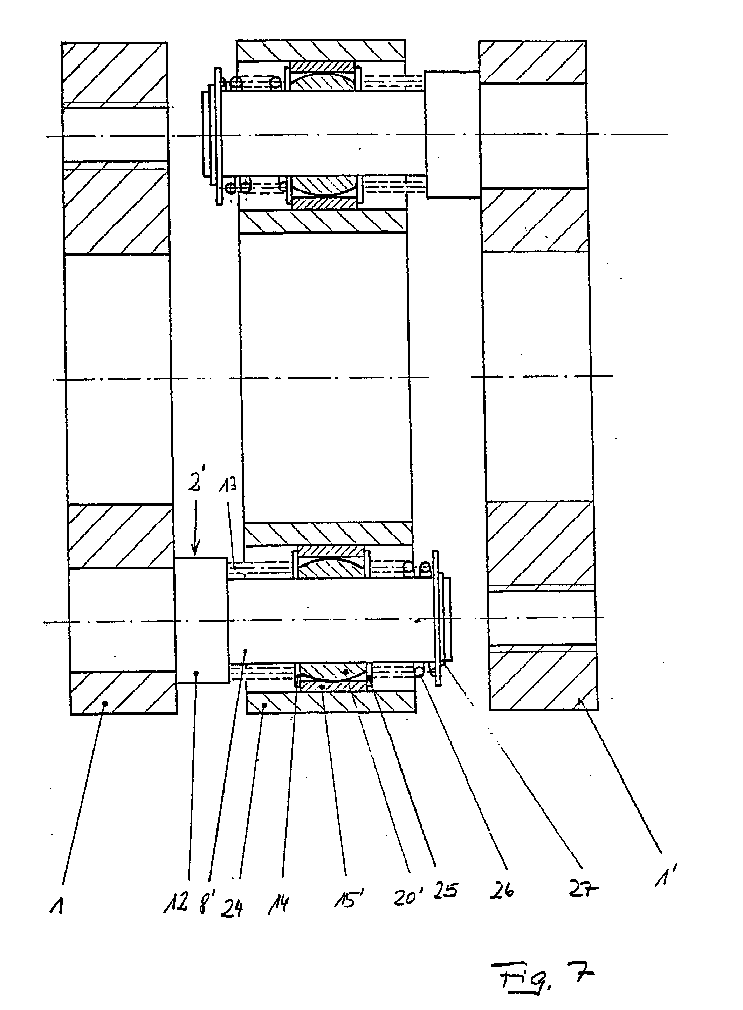

Fig. 7 zeigt eine alternative Ausführungsform für die Bolzenanordnung anhand einer Drei-Scheiben-Kupplung, die sich einfacher fertigen lässt als die Bolzenanordnung gemäss Fig. 1. Der Aufbau der Bolzenanordnung 2' entspricht im wesentlichen dem Aufbau der Bolzen 2. Die übereinstimmenden Teile, wie Zapfen 8', Anschlag 12, Ringscheibe 14 und erste Druckfeder 13, sind daher mit gleichen Bezugsziffern versehen wie in Fig. 1 ff. Hülse 15' und Kalottenring 20' sind in dieser Ausführungsform etwa gleich breit und auch zur anderen Seite durch eine Ringscheibe 25 abgeschlossen. Gegen die Ringscheibe 25 drückt eine zweite Druckfeder 26, die etwa gleich dimensioniert ist wie die erste Druckfeder 13. Das andere Ende der zweiten Druckfeder 26 stützt sich auf einem auf den Zapfen aufgesetzten Anschlag 27 ab. Die Ausgangsposition der Kalotte 20' und der Hülse 15' wird daher durch die Druckfedern 13, 26 bestimmt. Eine Auslenkung aus dieser Ausgangsposition führt zu einer Rückstellkraft durch die jeweils komprimierte Feder 13, 26.

Die Funktion der Bolzen 2' entspricht der wesentlichen Funktion der Bolzen 2. Wesentlich ist auch hierbei, dass die Hülse 15' wie die Hülse 15 innen eine zylindrische Wandung besitzt, die eine axiale Verschiebung des Kalottenrings 20' bzw. 20 gegenüber der Hülse 15' bzw. 15 erlaubt.

Es ist erkennbar, dass die Anzahl der Bolzen 2, 2' pro Scheibe 1, 3 nicht auf drei festgelegt ist. Es sind auch Ausführungsformen mit zwei oder mehr als drei Bolzen möglich. Durch Erhöhung der Bolzenzahl erhält man bei gleichem Durchmesser ein grösseres zu übertragendes Drehmoment.

**Patentansprüche**

1. Ausgleichskupplung mit mittels mehrerer Bolzen (2) verbundenen Flanschen (1, 1', 3), von denen einer mit einem rotierenden Antriebskörper und der andere mit einem rotierenden Abtriebskörper verbunden ist, wobei die Bolzen (2) einen an einem der beiden Flansche (1, 1', 3) befestigten Zapfen (8') aufweisen, und in eine an dem anderen Flansch (1, 1', 3) befestigte Hülse (15) ragen und sich die Hülse (15) über eine in axialer Richtung gewölbte Oberfläche auf dem Zapfen (8') abstützt, die durch einen auf den Zapfen (8') verschiebbar gelagerten Kalottenring (20) gebildet ist, dadurch gekennzeichnet, dass der Kalottenring (20) gegenüber der Hülse (15) in axialer Richtung verschiebbar gelagert ist und dass mindestens eine Druckfeder (13) den Kalottenring (20) in eine Ausgangsposition zurückdrückt.

2. Kupplung nach Anspruch 1, dadurch gekennzeichnet, dass sich die Druckfeder (13) an einer an der Hülse anliegenden Ringscheibe (14) abstützt.

3. Kupplung nach Anspruch 1 oder 2, dadurch gekennzeichnet, dass der flanschartige Anschlag (12), an dem sich die Druckfeder (13) abstützt, durch die Oberfläche eines Flansches (1, 1', 3) gebildet ist.

4. Kupplung nach einem der Ansprüche 1 bis 3, dadurch gekennzeichnet, dass eine zweite Druckfeder (19) an einem anderen Anschlag (16) anliegend in das Innere der Hülse (15) ragt und mit Vorspannung an der axial verschiebbaren, gewölbten Fläche (20) anliegt.

5. Kupplung nach Anspruch 4, dadurch gekennzeichnet, dass die Federkraft der ersten Druckfeder (13) wesentlich grösser ist als die Federkraft der zweiten Druckfeder (19).

6. Kupplung nach einem der Ansprüche 1 bis 3, dadurch gekennzeichnet, dass eine zweite Druckfeder (26) an einem anderen Anschlag (27) anliegend, gegen die der von der Druckfeder (13) beaufschlagten Seite des Kalottenrings (20') gegenüberliegende Seite drückt.

7. Kupplung nach Anspruch 6, dadurch gekennzeichnet, dass zwischen Kalottenring (20') und der zweiten Druckfeder (26) eine zweite Ringscheibe (25) angeordnet ist.

8. Kupplung nach Anspruch 6 oder 7, dadurch gekennzeichnet, dass die zweite Druckfeder (26) etwa die gleiche Stärke aufweist wie die erste Druckfeder (13).

9. Kupplung nach einem der Ansprüche 1 bis 8, dadurch gekennzeichnet, dass die Befestigung der Bolzen (2) im Flansch (1, 1', 3) in unterschiedlichen Einbaurichtungen erfolgt ist.

10. Kupplung nach einem der Ansprüche 1 bis 9, dadurch gekennzeichnet, dass zwischen den beiden Flanschen (1, 1') wenigstens eine Zwischenscheibe (23) angeordnet ist und dass die Bolzen (2) die Flansche (1, 1') mit der Zwischenscheibe (23) verbinden.

11. Kupplung nach einem der Ansprüche 1 bis 10, dadurch gekennzeichnet, dass ein Flansch eines der rotierenden Körper mit einer Axialversetzung erlaubenden Kupplung (4) versehen ist und dass die Verbindung der Kupplung (4) mit dem Flansch (1) des anderen rotierenden Körpers über die Bolzen (2) erfolgt.


### Claims

1. A compensating coupling comprises flanges (1, 1', 3) being connected by means of several bolts (2), one of said flanges being connected with a rotating drive member and the other with a rotating driven member, wherein said bolts (2) comprise a journal (8') fastened to one of the two flanges (1, 1', 3), and projecting into a sleeve (15) fastened to the other flange (1, 1', 3), said sleeve (15) being supported on the journal (8') by means of an axially convex surface, said surface being formed by a spherical ring (20) displaceably mounted on the bolt (8') characterized in that the spherical ring (20) is mounted in an axially displaceable manner with respect to the sleeve (15) and that at least one compressing spring (13) biases the spherical ring (20) into an initial position.

2. A coupling according to claim 1, characterized in that the compression spring (13) is supported on a washer (14) abutting against the sleeve.

3. A coupling according to claim 1 or 2, characterized in that the flange-like stop (12) supporting the compression spring (13) is formed by the surface of a flange (1, 1', 3).

4. A coupling according to one of the claims 1 to 3, characterized in that a second compression spring (19) abutting another stop (16) projects into the sleeve (15) and biases the axially displaceable convex surface (20).

5. A coupling according to claim 4, characterized in that the spring force of the first compression spring (13) is significantly greater than the spring force of the second compression spring (19).

6. A coupling according to one of the claims 1 to 3, characterized in that a second compression spring (26) which abuts another stop (27), presses against the opposite side of that side of the spherical ring (20') being charged by compression spring (13).

7. A coupling according to claim 6, characterized in that a second washer (25) is arranged between the spherical ring (20') and the second compression spring (26).

8. A coupling according to claim 6 or 7, characterized in that the second compression spring (26) is approximately of the same strength as the first compression spring (13).

9. A coupling according to one of the claims 1 to 8, characterized in that the bolts (2) are mounted in the flange (1, 1', 3) in different mounting directions.

10. Coupling according to one of the claims 1 to 9, characterized in that at least one intermediate disk (23) is arranged between said two flanges (1, 1') and that the bolts (2) connect the flanges (1, 1') to the intermediate disk (23).

11. Coupling according to one of the claims 1 to 10, characterized in that a flange of one of the rotating members is connected to a coupling which allows an axial offset and that the coupling (4) is connected with the flange (1) of the other rotating member through the bolts (27.


### Revendications

1. Accouplement compensé comportant des brides (1, 1', 3) qui sont réunies par plusieurs chevilles (2) et dont l'une est réunie à un élément tournant menant et l'autre à un élément tournant mené, tandis que les chevilles (2) présentent une broche (8') fixée à l'une des deux brides (1, 1', 3) et pénètrent dans une douille (15) fixée à l'autre bride (1, 1', 3) et que la douille (15) s'appuie sur la broche (8') par l'intermédiaire d'une surface qui selon la direction axiale est bombée et qui est formée par une bague calotte (20) montée à coulisse sur la broche (8'), caractérisé en ce que la bague calotte (20) est montée à coulisse selon la direction axiale par rapport à la douille (15); et en ce qu'au moins un ressort de compression (13) rappelle la bague calotte (20) à une position initiale.

2. Accouplement selon la revendication 1, caractérisé en ce que le ressort de compression (13) s'appuie contre une rondelle (14) reposant contre la douille.

3. Accouplement selon la revendication 1 ou 2, caractérisé en ce que la butée du type collet (12) contre laquelle s'appuie le ressort de compression (13), est constituée par la surface d'une bride (1, 1', 3).

4. Accouplement selon l'une des revendications 1 à 3, caractérisé en ce qu'un second ressort de compression (19), appuyé contre une seconde butée (16), pénètre à l'intérieur de la douille (15) et s'appuie, avec précontrainte, contre la surface bombée (20) axialement coulissable.

5. Accouplement selon la revendication 4, caractérisé en ce que la force élastique du premier ressort de compression (13) est significativement plus élevée que la force élastique du second ressort de compression (19).

6. Accouplement selon l'une des revendications 1 à 3, caractérisé en ce qu'un second ressort de compression (26), appuyé contre une autre butée (27), pousse contre le côté de la bague calotte (20') opposé au côté de cette bague attaqué par le ressort de compression (13).

7. Accouplement selon la revendication 6, caractérisé en ce qu'une seconde rondelle (25) est disposée entre la bague calotte (20') et le second ressort de compression (26).

8. Accouplement selon la revendication 6 ou 7, caractérisé en ce que le second ressort de compression (26) a à peu près la même force que le premier ressort de compression (13).

9. Accouplement selon l'une des revendications 1 à 8, caractérisé en ce que les chevilles (2) sont fixées dans la bride (1, 1', 3) avec des sens de montage différents.

10. Accouplement selon l'une des revendications 1 à 9, caractérisé en ce qu'au moins un disque intermédiare (23) est installé entre les deux brides (1, 1'), et en ce que les chevilles (2) relient les brides (1, 1') avec le disque intermédiaire (23).

11. Accouplement selon l'une des revendications 1 à 10, caractérisé en ce qu'une bride de l'un des éléments tournants est reliée à un accouplement (4) permettant un décalage axial, et en ce que la liaison de l'accouplement (4) avec la bride (1) de l'autre élément tournant est assurée par l'intermédiaire des chevilles (2).

Fig. 1

Fig. 2

**22**

*Fig. 3*

Fig. 4

*Fig. 5*

Fig. 6

2' 13

1

12 8' 24 14 15' 20' 25 26 27 1'

Fig. 7